# EUROPEAN PATENT APPLICATION

(11) **EP 2 840 184 A1**
(43) Date of publication of application: **25.02.2015**
(21) Application number: 13777774.4
(22) Date of filing: 01.02.2013
(51) Int. Cl.: E02B 9/00

(54) **AERO-HYDROELECTRIC POWER STATION**

(30) Priority: 17.04.2012 RU 2012115407
(71) Applicant: Kazantsev, Andrey Nikolaevich, St. Petersburg 195273 (RU)
(72) Inventor: Kazantsev, Andrey Nikolaevich, St. Petersburg 195273 (RU)
(74) Representative: Jeck, Anton
(86) International application number: PCT/RU2013/000070
(87) International publication number: WO 2013/157991

(57) **Abstract**

The invention relates to hydroelectric power industry and can be used for capturing the energy stored within atmospheric moisture at any location worldwide. The objective of the invention is to expand functional capabilities and increase specific power of a hydroelectric power plant by using a maximum possible level difference between the head race and tail race (from the atmospheric moisture condensation level to ground level). The main additional functional capability of such an aero-hydroelectric power plant consists in that it can operate practically anywhere, whilst taking up a very small amount of space on the ground, and can even be mobile. Moreover, it makes it possible to produce, at any location, clean water for drinking and irrigation, without causing any damage to the environment as a result of comparatively small hydro flows. The device comprises a tail race (1), a head race (2), a water conduit (3), a turbogenerator (4), meshed, woven or filmed surfaces (5), an airship (6), and fastening cables (7). The airship (6) raises the surfaces (5) to the altitude above the dew point corresponding to the given atmospheric conditions (usually, 2-3 km). There, the supercooled atmospheric moisture starts to condense (accumulate) actively on the surfaces (5). A drainage system provided on the surfaces (5) takes this water to a small reservoir (head race 2), from which the water, under a head caused by the entire altitude level difference, passes along the water conduit (3) into the tail race (1) on the ground, thereby producing electrical power in the turbogenerator (4). Illustr.

## Description

### Field of the invention

The invention relates to hydroelectric power industry and can be used for capturing the energy stored within atmospheric moisture at any location worldwide.

### Prior art

Various versions of hydroelectric power plant are known (see, for example, http://ru.wikipedia.org/wiki/┌∋C), utilizing the energy of a water stream arising from the level difference on both sides of a river dam. Such hydroelectric power plant has a head race (a water basin upstream of a dam), tail race (river level downstream of a dam), interconnecting water conduit, and a turbogenerator, which uses the energy of a water stream inside said water conduit to generate electric power.

Common disadvantages of such hydroelectric power plants is that they require significant capital expenses for constructing a dam, occupy significant territories for a water basin, cause harm to the ecology and are usually remotely located with respect to consumers. In addition, there is always a potential danger of possible dam destruction. To a certain extent, all these disadvantages result from relatively modest level differences and huge volumes of water, typical for the majority of sluggish rivers.

The closest to the proposed solution is the installation for collecting fog (see: http://www.oas.org/dsd/publications/unit/oea59e/ch12.htm) in Chile.

The fog-collecting installation is used for producing water, thus making the feasibility of the proposed solution quite obvious. However, this installation does not take advantage of generating electric power using the streams of collected water inside water conduits. There is not that many places in the world, where atmospheric moisture can be condensed in large quantities neat the ground surface (see: http://www.youtube.com/watch?v=niRtL81N2b4). The most promising is to use fogs formed at certain altitudes.

### Disclosure of the invention

This invention describes a hydroelectric power plant comprising a head race, tail race, water conduit and a turbogenerator. The hydroelectric power plant is provided with the meshed, woven or filmed surfaces embodied with the ability of receiving atmospheric moisture and delivering it to the head race.
The surfaces can be maintained at altitude levels above the dew-point via at least one air balloon and/or an airship.

In one of the embodiments, the surfaces can be installed on a kite or a parawing. The surfaces can be provided with a drainage system to collect atmospheric moisture embodied in the form of trenches and pipe channels transferring collected water to the head race located in close proximity to the specified surfaces.

In one of the embodiments, hydroelectric power plant can be divided into a group of sections located at different altitudes and equipped with intermediate turbogenerators.

The surfaces may have full or partial metallization.

Technical result - expansion of functional capabilities increase in specific capacity of hydroelectric power plants by using the maximum possible level difference between the head and the tail races (from the atmospheric moisture condensation level to the ground level), expansion of areal applicability of hydroelectric power plant (anywhere globally), reduction of ground footprint, and mobile implementation (including utilization on transportation means, for example, for electric power and water supply of ocean liners). In addition, such hydroelectric power plant provides a possibility of obtaining pure water for drinking and irrigation without causing any harm to ecology due to relatively modest hydro streams compared to conventional hydroelectric power plants. Another advantage is a reduction in capital and material consumption of hydroelectric power plants.

### Brief description of the drawings

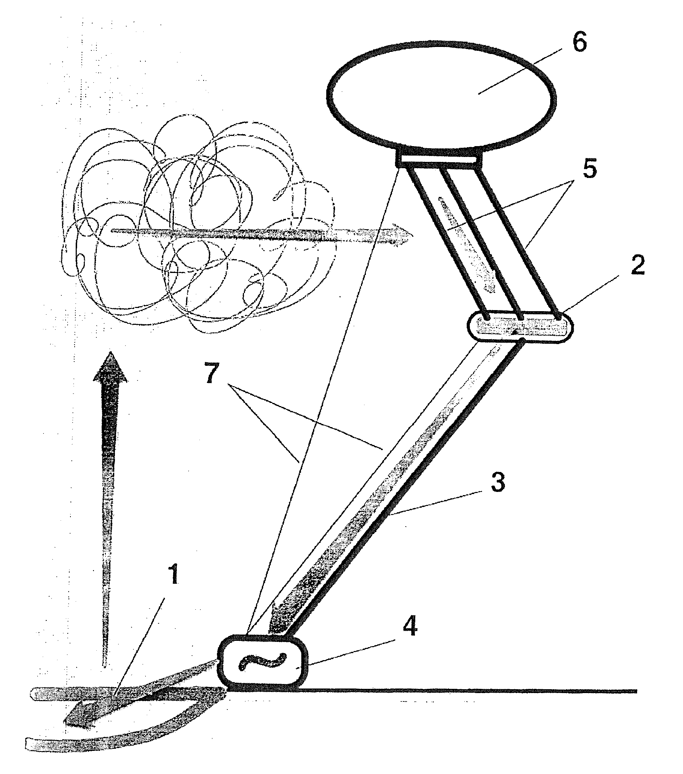

The Figure illustrates the operation of the proposed solution.

### Embodiment of the invention

It is known, that solar energy that reaches our planet is about 20,000 times more than demands of the mankind (see, for example, "Power engineering. Problems and prospects (in Rus.) - M.A.Styrikovich, E.E.Shpilrayn, Moscow: Energiya, 1981, p. 38, or the Internet link: http://airhes.com). About a quarter of this energy is spent on evaporation of water and in fact is constantly accumulated (more or less uniformly) in the atmosphere anywhere in the world. The standard hydroelectric industry is essentially capable of utilizing only a small portion of this energy, since most precipitations waste the majority of the potential energy to overcome the resistance of air and impact while making their way to the ground. In order to use this potential energy in a more rational way, it is proposed to collect water at an altitude where it condenses, and utilize the difference in altitude levels in a hydroelectric power plant, which will allow to use more of the water energy and, hence, generate more electric power.

The layout of the proposed Aero hydroelectric power plant is shown in the Figure. It comprises a tail race (1), head race (2), water conduit (3), turbogenerator (4), meshed, woven or filmed surfaces (5), airship (6) and fastening cables (7). The airship (6) lifts the surfaces (5) to the altitude level above the dew-point for the given atmospheric conditions (usually, 2-3 km), also known as a condensation line or a cloud base. It is promising to use fogs located at an altitude (i.e., clouds). There, a supercooled atmospheric moisture starts to actively condense (accumulate) on the surfaces (5). The drainage system on the surfaces (5) takes this water to a modest-size reservoir (head race (2)), from which the water, under a head caused by the entire altitude level difference (2-3 km), passes along the water conduit (3) into the tail race (1) on the ground, thereby producing electrical power in the turbogenerator (4).

The entire installation can be assembled at any location convenient for the electric power and water consumer by lifting and moving it as a whole using the airship (6).

If there are permanent steady winds blowing at a given location, or the solution is executed in the form of a portable installation (for example, for tourists or militaries), it is possible to do without the airship (6) and instead utilize the surfaces (5) as a parawing for retention of the entire construction in air (as occurs when launching a kite).

Modern construction materials will allow using a flexible tubular water conduit (3) with the maximum water pressure of up to 200-300 atmospheres and more. Also, in some embodiments the construction can be realized by dividing the water conduit (3) into several hinged rigid pipe sections with intermediate turbogenerators utilizing available head of the respective sections and transmitting electric power downwards using wires.

In addition, surfaces (5) can be embodied with full or partial metallization (for example, by interweaving metal conductors). This will allow strengthening the construction, reducing solar heating, enhancing condensation of water vapor due to applying electric field (for example, experiments have been conducted regarding the use of corona discharge for this purpose), as well as reducing ice formation, if necessary, by passing electric current.

In some embodiments, icing can be used as a standard mode, since the system possesses automatic stability: as ice accumulates, the entire construction will independently descend to the area of higher atmospheric temperatures, and once ice is melted, it will independently rise on to a required altitude.

Proposed Aero hydroelectric power plant can be utilized anywhere in the world without causing harm to the environment. Calculations show that such hydroelectric power plant is quite capable of sustain small cities, assuming that ∼100 M² of surfaces (5) per each resident will satisfy his/her demands in water (∼1000 l/day) and household electric power (∼150-200 kW-hour/month).

### Industrial applicability

An expert skilled in the art can realize the proposed solution using the description and drawings provided above in the form described in the claims while achieving all claimed technical results.

## Claims

1. A hydroelectric power plant comprising a head race, a tail race, a water conduit, and a turbogenerator, *wherein* said power plant is provided with meshed, woven or filmed surfaces embodied with a possibility of receiving atmospheric moisture and delivering it to the head race.

2. The hydroelectric power plant according to claim 1, *wherein* said surfaces are maintained at the altitude level above the dew-point using at least one air balloon and/or an airship.

3. The hydroelectric power plant according to claim 1, *wherein* said surfaces are embodied in the form of a kite or a parawing.

4. The hydroelectric power plant according to claim 1, *wherein* said surfaces are provided with a drainage system collecting atmospheric moisture embodied in the form of trenches and pipe channels transferring collected water to the head race located in the proximity of said surfaces.

5. The hydroelectric power plant according to claim 1, *wherein* said power plant contains a group of water conduit sections with intermediate turbogenerators.

6. The hydroelectric power plant according to claim 1, *wherein* said surfaces have full or partial metallization.
